Europäisches Patentamt

European Patent Office

Office européen des brevets

(19)

(11) Veröffentlichungsnummer: **0 271 671**
**B1**

(12) **EUROPÄISCHE PATENTSCHRIFT**

(45) Veröffentlichungstag der Patentschrift:
18.04.90

(51) Int. Cl.⁴: **F02M 31/12**
**// F02M37/22**

(21) Anmeldenummer: **87115494.4**

(22) Anmeldetag: **22.10.87**

(54) **Heizvorrichtung in einer zu einem Kraftstofffilter einer luftverdichtenden Einspritzbrennkraftmaschine führenden Kraftstoffzuleitung.**

(30) Priorität: **17.12.86 DE 3643054**

(43) Veröffentlichungstag der Anmeldung:
**22.06.88 Patentblatt 88/25**

(45) Bekanntmachung des Hinweises auf die Patenterteilung:
**18.04.90 Patentblatt 90/16**

(84) Benannte Vertragsstaaten:
**FR GB IT SE**

(56) Entgegenhaltungen:
**BE-A- 653 237**
**DE-A- 3 417 836**
**DE-U- 8 501 705**
**DE-U- 8 529 933**
**FR-A- 1 496 661**

(73) Patentinhaber: **Daimler-Benz Aktiengesellschaft,
Postfach 600202 Mercedesstrasse 136,
D-7000 Stuttgart 60(DE)**

(72) Erfinder: **Ahmann, Klaus-Peter, Beinsteiner Strasse 34,
D-7053 Kernen i.R.(DE)**

**Beschreibung**

Die Erfindung bezieht sich auf eine Heizvorrichtung in einer zu einem Kraftstoffilter einer luftverdichtenden Einspritzbrennkraftmaschine führenden Kraftstoffzuleitung, nach dem Oberbegriff des Patentanspruchs 1.

Um im Winterbetrieb bei tiefen Außentemperaturen ein Verzulzen des Dieselkraftstoffes und damit Betriebsstörungen der Brennkraftmaschine zu vermeiden, ist es aus dem DE-U 8 501 705 bereits bekannt, eine zum Anschluß eines Zuleitungsschlauches an das Kraftstoffilter dienende Hohlschraube mit einer elektrisch beheizbaren Glühkerze vorzusehen, deren Glühstift in den als Längsbohrung ausgebildeten Hohlraum und in den Strömungsweg des Kraftstoffes hineinragt. Bei wirksamem Glühstift wird der vorbeiströmende und in das Filtergehäuse geleitete Kraftstoff erwärmt. Verstopfungsgefahren im Kraftstoffilter durch Paraffinausscheidungen sind ausgeschaltet, jedoch bestehen bei einer derartigen Ausführung bei Versagen der elektrischen Schaltung - die Glühkerze läßt sich nicht abschalten - und bei abgeschaltetem Motorlauf Brandgefahren durch Überhitzung des unbewegten Kraftstoffes im Bereich des Glühstiftes.

Der Erfindung liegt daher die Aufgabe zugrunde, durch einfache Maßnahmen an der Heizvorrichtung die geschilderten Mängel zu beseitigen.

Zur Lösung der Aufgabe dienen die im Kennzeichen des Anspruches 1 angegebenen Merkmale. In den Unteransprüchen sind vorteilhafte und förderliche Weiterbildungen beansprucht.

Dadurch, daß der Heizstift nicht mehr als Glühstift wirkt, da er in den Schaft der Befestigungsschraube eingebettet ist, und der zu erwärmende Kraftstoff an dem Schraubenschaft außenwandig vorbeigeführt wird, können bei Ausfall der elektrischen Schaltung Brandgefahren auslösende Spitzentemperaturen nicht mehr erreicht werden. Der Heizstift ist mit wärmeleitfähigem Material direkt umgeben, welches die Wärme über das Schraubengewinde an das Kraftstoffilter weiterleitet.

Durch die besondere Anordnung der Längsnuten ergibt sich zudem noch der Vorteil, daß der in das Kraftstoffilterabfließende Kraftstoff aufgrund der Oberflächenvergrößerung des Kraftstoffdurchlasses schneller erwärmt wird.

In der Zeichnung ist der Gegenstand der Erfindung anhand eines Ausführungsbeispieles näher beschrieben.

Es zeigen:

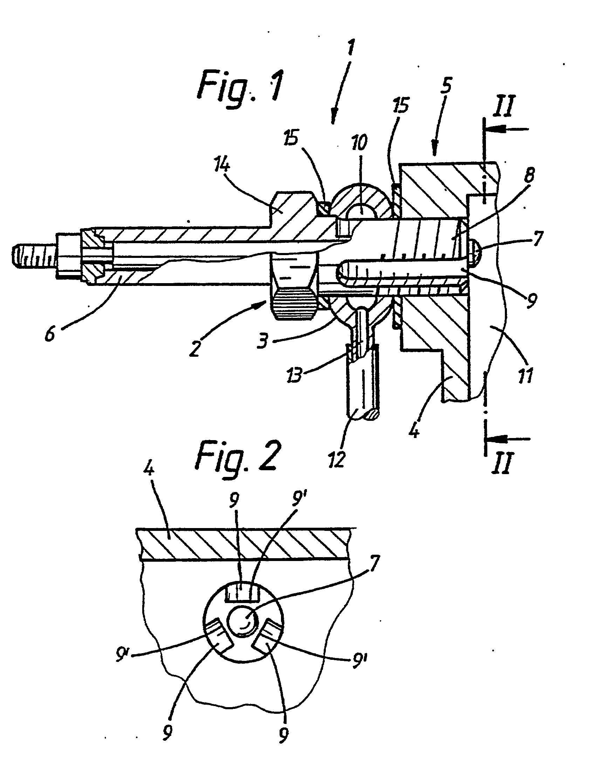

Figur 1 die erfindungsgemäße Ausführung im Längsschnitt,

Figur 1 die Ausführung nach der Linie II-II in Figur 1.

In Figur 1 ist eine elektrische Heizvorrichtung 1 für eine luftverdichtende selbstzündende Brennkraftmaschine gezeigt, bei der eine Befestigungsschraube 2 über ein ringförmiges Kraftstoffanschlußteil 3 in ein Filtergehäuse 4 eines Kraftstoffilters 5 eingeschraubt ist.

In die Befestigungsschraube 2 ist eine Vorwärmkerze 6 eingesetzt, deren Heizstift 7 in den Schraubenschaft 8 eingebettet ist und sich über die gesamte Länge dieses Schaftes 8 erstreckt. Zur Erwärmung des Kraftstoffes ist der Schaft 8 an seiner Mantelfläche mit als Längsnuten ausgebildeten drei Vertiefungen 9 (Fig. 2) versehen, die zwecks gleichmäßiger Wärmeübertragung drehsymmetrisch angeordnet sein können.

Die parallel zum Heizstift 7 verlaufenden Längsnuten 9 (Nutgrund 9'), die zwecks intensiverer Kraftstofferwärmung auch schraubenförmig an der Mantelfläche des Schraubenschaftes verlaufen können, stehen einerseits mit einer Ringnut 10 an der inneren Ringfläche des Kraftstoffanschlußteiles 3 und andererseits mit dem Innenraum 11 des Kraftstoffilters 5 in Verbindung.

Der durch einen Schlauch 12 in eine Radialbohrung 13 des Kraftstoffanschlußteiles 3 geförderte Kraftstoff gelangt über die Ringnut 10 in die Längsnuten 9, wird dort durch den beheizten Heizstift 7 ohne Heizstiftberührung erwärmt und fließt in den Kraftstoffilter 5 ab.

Um eine einwandfreie Abdichtung am Kraftstoffanschlußteil zu gewährleisten, sind zwischen dem Kraftstoffanschlußteil 3 und dem Schraubenkopf 14 einerseits und dem Kraftstoffanschlußteil 3 und dem Filtergehäuse 4 andererseits Abdichtringe 15 angeordnet.

Die besondere Ausgestaltung der Heizvorrichtung ist auch für gemischverdichtende Brennkraftmaschinen zu verwenden, durch die z.B. geringere schädliche Abgasbestandteile erzielt werden.

**Patentansprüche**

1. Heizvorrichtung in einer zu einem Kraftstoffilter einer luftverdichtenden Einspritzbrennkraftmaschine führenden Kraftstoffzuleitung, mit einer elektrisch beheizbaren Vorwärmkerze (6), deren Heizstift (7) in einer in das Filtergehäuse (4) des Kraftstoffilters (5) eingeschraubten Befestigungsschraube (2) angeordnet ist, zwischen deren Schraubenkopf (14) und dem Filtergehäuse (4) ein den Schraubenschaft (8) umgebender ringförmiger Kraftstoffanschlußteil (3) dichtend eingeklemmt ist, deren innere Ringfläche eine Ringnut (10) aufweist, über die geförderter Kraftstoff in Längsrichtung des Heizstiftes (7) verlaufend dem Kraftstoffilter (5) zugeführt wird, **dadurch gekennzeichnet, daß** der Heizstift (7) in den aus wärmeleitfähigem Material bestehenden Schraubenschaft (8) eingebettet und die Zuführung des Kraftstoffes zum Filtergehäuse (4) durch an der äußeren Mantelfläche des Schraubenschaftes (8) eingearbeitete und mit der Ringnut (10) verbundene Vertiefungen (9) gebildet ist.

2. Heizvorrichtung nach Anspruch 2, **dadurch gekennzeichnet, daß** die Vertiefungen (9) als Längsnuten ausgebildet sind.

3. Heizvorrichtung nach den Ansprüchen 1 und 2, **dadurch gekennzeichnet, daß** die Längsnuten (9) drehsymmetrisch angeordnet sind.

4. Heizvorrichtung nach einem der vorhergehenden Ansprüche, **dadurch gekennzeichnet, daß** der Nutgrund (9′) jeder Längsnut (9) einen geringen Abstand zum Heizstift (7) aufweist, der höchstens der Hälfte des Abstandes zwischen den Mantelflächen des Heizstiftes (7) und des Schraubenschaftes (8) entspricht.

5. Heizvorrichtung nach einem der vorhergehenden Ansprüche, **dadurch gekennzeichnet,** daß die Längsnuten (9) parallel oder schraubenförmig zum Heizstift (7) verlaufen.

## Claims

1. A heating device in a fuel line leading to a fuel filter of an air-compressing injection-type internal combustion engine, with an electrically heatable preheater plug (6), the heating terminal (7) of which is disposed in a fixing screw (2) which is screwed into the filter housing (4) of the fuel filter (5) and between the screw head (14) and the filter housing (4) of which there is enclosing the screw shank (8) an annular fuel connecting member (3) which is clamped in sealing tight fashion and the inner annular face of which comprises an annular groove (10) via which supplied fuel is fed to the fuel filter (5) in the longitudinal direction of the heating terminal (7), characterised in that the heating terminal (7) is embedded in the screw shank (8) which consists of a heat conductive material and in that the supply of fuel to the filter housing (4) consists of depressions (9) connected to the annular groove (10) and machined into the outer peripheral surface of the screw shank (8).

2. A heating device according to Claim 1, characterised in that the depressions (9) are constructed as longitudinal grooves.

3. A heating device according to Claims 1 and 2, characterised in that the longitudinal grooves (9) are rotationally symmetrically disposed.

4. A heating device according to one of the preceding Claims, characterised in that the bottom (9′) of each longitudinal groove (9) is at a minimal distance from the heating terminal (7) which corresponds at most to half the distance between the peripheral surfaces of the heating terminal (7) and of the screw shank (8).

5. A heating device according to one of the preceding Claims, characterised in that the longitudinal grooves (9) extend parallel with or helically in relation to the heating terminal (7).

## Revendications

1. Dispositif de chauffage dans un conduit d'admission de carburant aboutissant à un filtre à carburant d'un moteur à combustion interne à injection et compression d'air, comportant une bougie de préchauffage (6) pouvant être chauffée électriquement et dont la broche de chauffage (7) est disposée dans un boulon de fixation (2) vissé dans le carter (4) du filtre à carburant (5), tandis qu'entre la tête de boulon (14) et le carter de filtre (4) est serrée de façon étanche une pièce d'admission de carburant (3) de forme annulaire entourant la tige de boulon (8) et dont la surface annulaire intérieure comporte une rainure annulaire (10) par l'intermédiaire de laquelle du carburant entrant est année au filtre à carburant (5) en progressant dans la direction longitudinale de la broche de chauffage (7), caractérisé en ce que la broche de chauffage (7) est encastrée dans la tige de boulon (8), se composant d'un matériau conducteur de chaleur et l'alimentation en carburant du carter de filtre (4) est assurée par des creux (9) usinés dans la surface périphérique extérieure de la tige de boulon (8) et reliés à la rainure annulaire (10).

2. Dispositif de chauffage selon la revendication 1, caractérisé en ce que les creux (9) sont agencés comme des rainures longitudinales.

3. Dispositif de chauffage selon les revendications 1 et 2, caractérisé en ce que les rainures longitudinales (9) sont disposées avec symétrie de révolution.

4. Dispositif de chauffage selon une des revendications précédentes, caractérisé en ce que le fond (9′) de chaque rainure longitudinale (9) présente par rapport à la broche de chauffage (7) un petit espacement qui correspond au maximum à la moitié de l'espacement entre les surfaces périphériques de la broche de chauffage (7) et de la tige de boulon (8).

5. Dispositif de chauffage selon une des revendications précédentes, caractérise en ce que les rainures longitudinales (9) sont disposées parallèlement ou avec une forme d'hélice par rapport à la broche de chauffage (7).

EP 0 271 671 B1

Fig. 1

Fig. 2